# EUROPEAN PATENT APPLICATION

(11) **EP 4 586 387 A2**
(43) Date of publication of application: **16.07.2025**
(21) Application number: 24793110.8
(22) Date of filing: 27.03.2024
(51) Int. Cl.: H01M 50/431, H01M 50/446, H01M 50/417, H01M 50/489, H01M 10/052

(54) **SEPARATOR FOR ELECTROCHEMICAL DEVICE, AND ELECTROCHEMICAL DEVICE COMPRISING SAME**

(30) Priority: 21.04.2023 KR 20230052684
(71) Applicant: LG Energy Solution, Ltd., Seoul 07335 (KR)
(72) Inventor: BANG, Ji Hyun, Daejeon 34122 (KR); JEONG, So Mi, Daejeon 34122 (KR); YOON, Yeo Ju, Daejeon 34122 (KR); KIM, Seong Jun, Daejeon 34122 (KR); KIM, Yeong Ha, Daejeon 34122 (KR)
(74) Representative: Hoffmann Eitle
(86) International application number: PCT/KR2024/095634
(87) International publication number: WO 2024/219927

(57) **Abstract**

The present disclosure relates to a separator for an electrochemical device and an electrochemical device including the same, and particularly, to a separator for an electrochemical device, which can increase the trapping effect of transition metal ions that are generated from a positive electrode and can prevent a by-product that is deposited at a boundary surface of a positive electrode from obstructing a pore because a content of inorganic matter particles included in a porous polymer base is differently implemented depending on the locations of the inorganic matter particles, and an electrochemical device including the same.

## Description

### Technical Field

The present invention claims the benefit of Korean Patent Application No. 10-2023-0052684 filed in the Korean Intellectual Property Office on April 21, 2023, the entire contents of which are incorporated herein by reference. The present disclosure relates to a separator for an electrochemical device and an electrochemical device including the same, and particularly, to a separator for an electrochemical device, which can increase the trapping effect of transition metal ions that are generated from a positive electrode and can prevent a by-product that is deposited at a boundary surface of a positive electrode from obstructing a pore because a content of inorganic matter particles included in a porous polymer base is differently implemented depending on the locations of the inorganic matter particles, and an electrochemical device including the same.

### Background Art

Among components of an electrochemical device, a separator includes a polymer base having a porous structure that is disposed between a positive electrode and a negative electrode, and plays a role to separate the positive electrode and the negative electrode, to prevent an electrical short-circuit between the two electrodes, and to transmit an electrolyte and ions. The separator itself does not participate in an electrochemical reaction, but physical properties of the separator, such as wettability for the electrolyte, a degree of porosity, and a thermal shrinkage ratio, affect performance and safety of the electrochemical device.

Accordingly, in order to enhance the physical properties of the separator, various methods for changing the physical properties of a coating layer by adding the coating layer to the porous polymer base and adding various materials to the coating layer are attempted. For example, in order to improve mechanical strength of the separator, an inorganic matter may be added to the coating layer, or an inorganic matter or hydrate for improving flame resistance and heat resistance of a polymer base may be added to the coating layer.

The separator may be bonded to an electrode through a lamination process. In order to secure an adhesive force between the electrode and the separator, binder resin may be added to a coating layer composition of the separator.

Meanwhile, in a lithium ion secondary battery, as transition metal ions within a positive electrode material are eluted, the transition metal ions are accumulated on a negative electrode through a separator. There is a problem in that the battery is degraded due to the accumulated transition metal ions.

Moreover, such transition metal ions and by-product are accumulated on a pore of a porous polymer base included in the separator, a pore of a coating layer, and a boundary surface of the porous polymer base and the coating layer. Accordingly, there are problems in that performance of a battery are rapidly degraded and the battery is degraded.

As a result, it is necessary to develop a battery capable of preventing transition metal ions that are generated from a positive electrode material from moving to a negative electrode and preventing a pore from being obstructed due to the transition metal ions.

### DISCLOSURE

### Technical Problem

A technical object to be achieved by the present disclosure is to provide a separator for an electrochemical device, which can prevent a pore from being obstructed by transition metal ions and can reduce a by-product which may be generated by the driving of a battery by differently implementing the size and porosity of a pore and a content of inorganic matter particles depending on the location of a porous polymer base and making the inorganic matter particles absorb transition metal ions that are generated from a positive electrode, and an electrochemical device including the same.

However, objects to be achieved by the present disclosure are not limited to the aforementioned object, and the other objects not described above may be evidently understood from the following description by those skilled in the art.

### Technical Solution

An embodiment of the present disclosure provides a separator for an electrochemical device, wherein the separator includes a porous polymer base including inorganic matter particles, and includes a first part that neighbors one surface of the porous polymer base and a second part that faces the first part, the weight of inorganic matter particles included in the first part is greater than the weight of inorganic matter particles included in the second part, and the inorganic matter particles are capable of adsorbing transition metal ions.

According to an embodiment of the present disclosure, the inorganic matter particle may be one selected from a group consisting of zeolite, silica gel, carbon fiber, porous carbon, porous metal oxide, a metal-organic framework (MOF), and a combination of them.

According to an embodiment of the present disclosure, the inorganic matter particles included in the first part and the inorganic matter particles included in the second part may be identical with each other or different from each other.

According to an embodiment of the present disclosure, the porous polymer base may be polyolefin-based resin.

According to an embodiment of the present disclosure, the size of a pore included in the first part may be greater than the size of a pore included in the second part.

According to an embodiment of the present disclosure, the size of a pore included in the first part may be 20 *µ*m or more to 100 *µ*m or less, and the size of a pore included in the second part may be 20 *µ*m or more to 100 *µ*m or less.

According to an embodiment of the present disclosure, the porosity of the first part may be greater than the porosity of the second part.

According to an embodiment of the present disclosure, the porosity of the first part may be 50 vol% or more to 70 vol% or less, and the porosity of the second part may be 40 vol% or more to 50 vol% or less.

According to an embodiment of the present disclosure, the thickness of the first part may be equal to or smaller than the thickness of the second part.

According to an embodiment of the present disclosure, the first part may be provided to neighbor a positive electrode.

According to an embodiment of the present disclosure, a part of a surface of the inorganic matter particle may be included to protrude from the porous polymer base to the outside.

According to an embodiment of the present disclosure, the thickness of the separator for an electrochemical device may be 9 *µ*m or less.

An embodiment of the present disclosure provides an electrochemical device including a positive electrode; a negative electrode; and a separator, wherein the separator is interposed between the positive electrode and the negative electrode and is a separator for an electrochemical device.

According to an embodiment of the present disclosure, a first part of the separator may be disposed to face the positive electrode, and a second part of the separator may be disposed to face the negative electrode.

### Advantageous Effects

The separator for an electrochemical device according to an embodiment of the present disclosure can prevent transition metal ions that are generated from the positive electrode from being accumulated on the negative electrode by trapping transition metal ions.

The separator for an electrochemical device according to an embodiment of the present disclosure can prevent a pore from being obstructed by transition metal ions that are generated from the positive electrode and can prevent the degradation of a battery.

The separator for an electrochemical device according to an embodiment of the present disclosure can secure an insulating property by including a pore having a small size.

The electrochemical device according to an embodiment of the present disclosure can improve performance of a battery and extend the lifespan of the battery.

### Brief Description of Drawings

FIG. 1 is a schematic diagram of a separator for an electrochemical device according to an embodiment of the present disclosure.
FIG. 2 is a schematic diagram of a separator for an electrochemical device according to an embodiment of the present disclosure.
FIG. 3 is a schematic diagram of an electrochemical device according to an embodiment of the present disclosure.

### Best Mode

In this specification, when it is said that a part "includes" a component, it means that another component is not excluded, but another component may be further included, unless explicitly described to the contrary.

In this specification, "A and/or B" means "A and B, or A or B".

In this specification, when it is said that one component is provided "on" the other component, it means that another component may be further disposed without excluding that another component is disposed between the two components, unless explicitly described to the contrary.

In this specification, a characteristic "having a pore" means that a fluid having a gas and/or liquid state can pass from one side of a target to the other side due to a structure in which pores have been mutually connected because the target includes a plurality of pores.

In this specification, a separator has a porous characteristic including multiple pores, and plays a role as a porous ion-conducting barrier which transmits ions while blocking an electrical contact between a negative electrode and a positive electrode in an electrochemical device.

Hereinafter, the present disclosure is described more specifically.

An embodiment of the present disclosure provides a separator for an electrochemical device, which includes a porous polymer base including inorganic matter particles and includes a first part that neighbors one surface of the porous polymer base and a second part that faces the first part. The weight of the inorganic matter particles included in the first part may be greater than the weight of the inorganic matter particles included in the second part. The inorganic matter particles may adsorb transition metal ions.

The separator for an electrochemical device according to an embodiment of the present disclosure can prevent transition metal ions that are generated from a positive electrode from being accumulated on a negative electrode by trapping the transition metal ions. Moreover, the separator for an electrochemical device according to an embodiment of the present disclosure can prevent a pore from being obstructed by the transition metal ions that are generated from the positive electrode, and can prevent the degradation of a battery. Furthermore, the separator for an electrochemical device according to an embodiment of the present disclosure can secure an insulating property by including a pore having a small size.

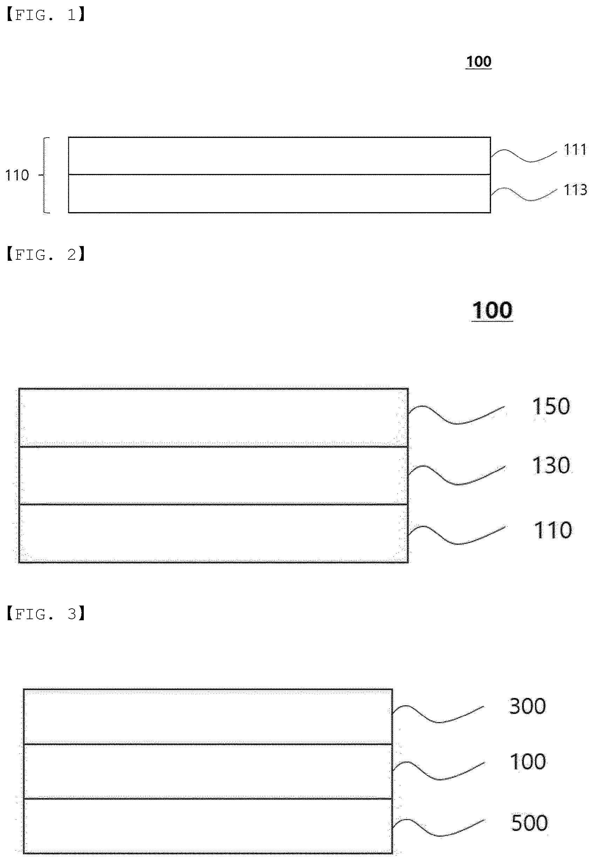

FIG. 1 is a schematic diagram of a separator for an electrochemical device according to an embodiment of the present disclosure. The separator for an electrochemical device according to an embodiment of the present disclosure is described in detail with reference to FIG. 1.

According to an embodiment of the present disclosure, a separator 100 for an electrochemical device includes a porous polymer base 110. As the separator 100 for an electrochemical device includes the porous polymer base 110 as described above, the separator can transmit lithium ions while blocking an electrical contact, and can implement a shutdown function at a proper temperature.

According to an embodiment of the present disclosure, the porous polymer base may be polyolefin-based resin. Specifically, the porous polymer base 110 may be manufactured by using polyolefin-based resin as base resin. Polyethylene, polypropylene, polypentene, etc. may be taken as examples of the polyolefin-based resin. The polyolefin-based resin may include one or more of polyethylene, polypropylene, and polypentene. The separator that is manufactured by using such polyolefin-based resin as the base resin and that has porosity, that is, multiple pores, is advantageous in terms of assigning a shutdown function at a proper temperature.

According to an embodiment of the present disclosure, the weight-average molecular weight of the polyolefin-based resin may be 500,000 or more to 1.5 million or less. By adjusting the weight-average molecular weight of the polyolefin resin in the aforementioned range, compression resistance of the separator can be improved. Moreover, if the separator in which types of heterogeneous polyolefin-based resin have been mixed is used or the separator having a multi-layer structure including heterogeneous polyolefin-based resin is formed, the weight-average molecular weight of polyolefin-based resin may be calculated by adding a weight-average molecular weight according to a content ratio of each of pieces of the polyolefin-based resin.

In the present disclosure, the weight-average molecular weight (Mw) may be measured by gel permeation chromatography (GPC: PL GPC220, Agilent Technologies), and measuring conditions may be set as follows.
- Column: PL Olexis (Polymer Laboratories)
- Solvent: TCB (Trichlorobenzene)
- Flow velocity: 1.0 ml/min
- Sample concentration: 1.0 mg/ml
- Amount of injection: 200 *µ*ℓ
- Column temperature: 160 °C
- Detector: Agilent High Temperature RI detector
- Standard: Polystyrene (corrected into a cubic function)

According to an embodiment of the present disclosure, the porous polymer base 110 may be manufactured by a method (wet method) of generating a single phase by mulling polyolefin-based resin with diluents and inorganic matter particles at a high temperature, separating the phases of the polyolefin-based resin and the diluents in a cooling process, then forming pores by extracting the diluents, and then performing stretching and heat fixation treatment.

According to an embodiment of the present disclosure, the porous polymer base 110 may be manufactured by laminating a first part and a second part, after manufacturing the first part of the porous polymer base by a method (wet method) of generating a single phase by mulling polyolefin-based resin with diluents and inorganic matter particles at a high temperature, separating the phases of the polyolefin-based resin and the diluents in a cooling process, then forming pores by extracting the diluents, and then performing stretching and heat fixation treatment and manufacturing the second part of the porous polymer base by a method (wet method) of generating a single phase by mulling polyolefin-based resin with diluents and inorganic matter particles at a high temperature, separating the phases of the polyolefin-based resin and the diluents in a cooling process, then forming pores by extracting the diluents, and then performing stretching and heat fixation treatment.

According to an embodiment of the present disclosure, those skilled in the art may easily manufacture the separator 100 for an electrochemical device so that an average size of the pores and a maximum size of the pore, of the separator 100 for an electrochemical device, comply with the range of the present disclosure by adjusting a mixing ratio of the diluents, draw magnification, heat fixation treatment temperature, etc.

In this specification, the "size of the pore" may be calculated from a distribution of pore sizes that are measured by using the capillary flow porometer method. For example, first, after the separator to be measured is dipped into a wetting agent, such as a galwick solution, air pressure on one side of the base is gradually increased. At this time, when the applied air pressure becomes greater than capillary attraction of the wetting agent present within the pore, the wetting agent that closes the pore is pushed out. The sizes and distribution of the pores are measured based on pressure and a flowrate at the moment when the wetting agent is pushed out. An average size and maximum size of the pores may be checked based on the sizes and the distribution.

According to an embodiment of the present disclosure, the separator 100 for an electrochemical device includes the porous polymer base 110 including inorganic matter particles. As described above, as the separator for an electrochemical device includes the porous polymer base including the inorganic matter particles, trapping efficiency of transition metal ions that are generated from the positive electrode can be improved, and the transition metal ions can be prevented from being accumulated on the negative electrode through the pores or from being accumulated at the boundary surface of the separator and the positive electrode.

According to an embodiment of the present disclosure, the first part 111 that neighbors one surface of the porous polymer base and the second part 113 that faces the first part 111 are included. Specifically, in one surface and the other surface of the porous polymer base, the first part including the one surface and the second part including the other surface may be included. That is, the first part including one surface of the porous base and the second part including the other surface of the porous base on the basis of the center line of the porous polymer base may be included. The first part and the second part may neighbor each other, or another part may be further included between the first part and the second part. As the first part that neighbors one surface of the porous polymer base and the second part that faces the first part are included as described above, performance of a battery can be improved by differently implementing physical properties or chemical properties depending on an electrode that neighbors one surface and the other surface of the porous polymer base.

According to an embodiment of the present disclosure, the weight of the inorganic matter particles included in the first part is greater than the weight of the inorganic matter particles included in the second part. Specifically, a content of inorganic matter particles of the first part may be greater than the content of inorganic matter particles of the second part. By implementing the weight of the inorganic matter particles included in the first part to be greater than the weight of the inorganic matter particles included in the second part as described above, trapping efficiency can be improved because transition metal ions that are generated from the positive electrode are easily adsorbed.

According to an embodiment of the present disclosure, the grain diameter of the inorganic matter particles included in the first part may be greater than the grain diameter of the inorganic matter particles included in the second part. By implementing the grain diameter of the inorganic matter particles included in the first part to be greater than the grain diameter of the inorganic matter particles included in the second part as described above, the size and/or porosity of the pore of the first part may be implemented to be greater than the size and/or porosity of the pore of the second part.

According to an embodiment of the present disclosure, the inorganic matter particles may adsorb transition metal ions. Specifically, the transition metal ions may be transition metal ions that are generated from the positive electrode. By selecting ones capable of absorbing transition metal ions as the inorganic matter particles as described above, the accumulation of transition metal ions that are generated from the positive electrode on the negative electrode can be minimized by adsorbing and trapping the transition metal ions.

According to an embodiment of the present disclosure, the inorganic matter particles may be any one selected from a group consisting of zeolite, silica gel, carbon fiber, porous carbon, porous metal oxide, a metal-organic framework (MOF), and a combination of them. By selecting the inorganic matter particles from those described above, the accumulation of transition metal ions that are generated from the positive electrode on the negative electrode can be minimized by adsorbing and trapping the transition metal ions.

According to an embodiment of the present disclosure, the porous carbon may be any one selected from a group consisting of activated carbon, activated carbon fiber, carbon nanotube, and a combination of them.

According to an embodiment of the present disclosure, the porous metal oxide may be any one selected from a group consisting of porous SiO₂, porous Al₂O₃, porous AlOOH, porous Al(OH)₃, and a combination of them.

According to an embodiment of the present disclosure, the metal-organic framework (MOF) may be any one selected from a group consisting of MOF-808, UiO-66-NH₂, UiO-66, UiO-66-COOH, UiO-66-F₄, UiO-67, MIL-101, MIL-125, MIL-53, MIL-100, MIL-53 (Al) MOF, ZIF-8 MOF, HKUST-1 MOF, and a combination of them.

According to an embodiment of the present disclosure, the inorganic matter particles included in the first part and the inorganic matter particles included in the second part may be the same or different from each other. By implementing that the inorganic matter particles included in the first part and the inorganic matter particles included in the second part are the same or different from each other as described above, trapping efficiency of transition metal ions can be differently implemented depending on a location, and porosity and the size of the pore may be adjusted depending on a location.

According to an embodiment of the present disclosure, the size of the pore included in the first part may be greater than the size of the pore included in the second part. By adjusting the size of the pore included in the first part to be greater than the size of the pore included in the second part as described above, the pore can be prevented from being obstructed by transition metal ions that are generated from the positive electrode. An insulating property can be secured by implementing a pore having a small size at a part in which the pore has no danger of being obstructed. Accordingly, the thickness of the separator can be reduced.

According to an embodiment of the present disclosure, the size of the pore included in the first part may be 20 *µ*m or more to 100 *µ*m or less. Specifically, the size of the pore included in the first part may be 25 *µ*m or more to 95 *µ*m or less, 30 *µ*m or more to 90 *µ*m or less, 35 *µ*m or more to 85 *µ*m or less, 40 *µ*m or more to 80 *µ*m or less, 45 *µ*m or more to 75 *µ*m or less, 50 *µ*m or more to 70 *µ*m or less, or 55 *µ*m or more to 65 *µ*m or less. By adjusting the size of the pore included in the first part in the aforementioned range, a pore can be prevented from being obstructed by transition metal ions that are generated from the positive electrode.

According to an embodiment of the present disclosure, the size of the pore included in the second part may be 20 *µ*m or more to 100 *µ*m or less. Specifically, the size of the pore included in the second part may be 25 *µ*m or more to 95 *µ*m or less, 30 *µ*m or more to 90 *µ*m or less, 35 *µ*m or more to 85 *µ*m or less, 40 *µ*m or more to 80 *µ*m or less, 45 *µ*m or more to 75 *µ*m or less, 50 *µ*m or more to 70 *µ*m or less, or 55 *µ*m or more to 65 *µ*m or less. By adjusting the size of the pore included in the second part in the aforementioned range, an insulating property can be secured by implementing a pore having a small size at a part at which the pore has no danger of being obstructed. Accordingly, the thickness of the separator can be reduced.

According to an embodiment of the present disclosure, the porosity of the first part may be greater than the porosity of the second part. By implementing the porosity of the first part to be greater than the porosity of the second part as described above, a pore can be prevented from being obstructed by transition metal ions that are generated from the positive electrode. An insulating property can be secured by implementing a small porosity at a part at which the pore has no danger of being obstructed. Accordingly, the thickness of the separator can be reduced.

According to an embodiment of the present disclosure, the porosity of the first part may be 50 vol% or more to 70 vol% or less. Specifically, the porosity of the first part may be 51 vol% or more to 69 vol%, 52 vol% or more to 68 vol%, 53 vol% or more to 67 vol%, 54 vol% or more to 66 vol%, 55 vol% or more to 65 vol%, 56 vol% or more to 64 vol%, 57 vol% or more to 63 vol%, 58 vol% or more to 62 vol%, or 59 vol% or more to 61 vol%. By adjusting the porosity of the first part in the aforementioned range, a pore can be prevented from being obstructed by transition metal ions that are generated from the positive electrode.

According to an embodiment of the present disclosure, the porosity of the second part may be 40 vol% or more to 50 vol% or less. Specifically, the porosity of the second part may be 41 vol% or more to 49 vol%, 42 vol% or more to 48 vol%, 43 vol% or more to 47 vol%, or 44 vol% or more to 46 vol%. By adjusting the porosity of the second part in the aforementioned range, an insulating property can be secured by implementing a pore having a small size at a part at which the pore has no danger of being obstructed. Accordingly, the thickness of the separator can be reduced.

In this specification, the "porosity" means the ratio of a volume that is occupied by a pore with respect to the entire volume. vol% is used as a unit of the porosity. The porosity may be interchangeably used with a term, such as an air void or a pore diameter. In the present disclosure, the measurement of the porosity is not specially limited. According to an embodiment of the present disclosure, the porosity may be measured by a Brunauer-Emmett- Teller (BET) measuring method using nitrogen gas or an Hg porosimeter, for example. Alternatively, in an embodiment of the present disclosure, the density (apparent density) of an obtained electrode (electrode active material layer), and the net density of an electrode active material layer based on a composition ratio of materials included in the electrode (electrode active material layer) and the density of each component may be calculated. The porosity of the electrode active material layer may be calculated based on a difference between the apparent density and the net density.

According to an embodiment of the present disclosure, the thickness of the first part may be equal to or smaller than the thickness of the second part. The thickness of each part may mean the length of a straight line that is perpendicular to one surface of the porous polymer base in a total length in which each part passes through the porous polymer base. Specifically, the thickness of the first part may be more than 0% to 50% or less with respect to a total thickness of the porous polymer base. By implementing the thickness of the first part equal to or smaller than the thickness of the second part as described above, a pore can be prevented from being obstructed by transition metal ions that are generated from the positive electrode, and an insulating property of the separator can be secured.

According to an embodiment of the present disclosure, the first part may be disposed to neighbor a positive electrode. By including the first part to neighbor the positive electrode as described above, transition metal ions and/or by-products that are generated from the positive electrode can be prevented from being accumulated on the porous polymer base, a coating layer that is described later, and a boundary surface between the coating layer and the porous polymer base, and the degradation of a battery can be prevented by improving trapping efficiency of transition metal ions. Moreover, the lifespan of a battery can be improved by preventing a pore from being obstructed by transition metal ions that are generated from the positive electrode in the first part.

According to an embodiment of the present disclosure, a part of a surface of the inorganic matter particle may be included so that the part protrudes from the porous polymer base to the outside. Specifically, this may mean that the inorganic matter particles are not sealed by the porous polymer base and some of the inorganic matter particles are exposed to a pore of the porous polymer base or a surface of the porous polymer base. Efficiency in which transition metal ions are trapped by the inorganic matter particles can be improved because a part of a surface of the inorganic matter particles is included so that the part protrudes from the porous polymer base to the outside as described above.

According to an embodiment of the present disclosure, the thickness of the separator for an electrochemical device may be 9 *µ*m or less. Specifically, the thickness of the separator for an electrochemical device may be more than 0 *µ*m to 9 *µ*m or less, 1 *µ*m or more to 8 *µ*m or less, 2 *µ*m or more to 7 *µ*m or less, 3 *µ*m or more to 6 *µ*m or less, or 4 *µ*m or more to 5 *µ*m or less. By adjusting the thickness of the separator for an electrochemical device in the aforementioned range, the energy density of the electrochemical device can be improved.

In an embodiment of the present disclosure, the thicknesses of the porous polymer base, the coating layer and/or the bonding layer may be measured by applying a contact type measuring instrument. For example, VL-50S-B of Mitutoyo Corporation may be used as the contact type measuring instrument.

According to an embodiment of the present disclosure, the separator 100 for an electrochemical device may include a coating layer 130 provided on at least one surface of the porous polymer base 110. Specifically, the separator 100 for an electrochemical device may include the coating layer 130 on one surface of the porous polymer base 110 or the coating layer 130 on both surfaces of the porous polymer base 110. Heat resistance of the separator can be improved, mechanical properties of the separator can be enhanced, and the occurrence of an electrical short-circuit of an electrode attributable to the contraction of the separator at a high temperature can be prevented because the separator 100 for an electrochemical device includes the coating layer 130 provided on at least one surface of the porous polymer base 110 as described above.

According to an embodiment of the present disclosure, the separator 100 for an electrochemical device may include the coating layer 130 including a first polymer binder 131 (not illustrated) and inorganic matter particles 133 (not illustrated). As the coating layer 130 includes the first polymer binder 131 and the inorganic matter particles 133 as described above, heat resistance of the separator can be improved, mechanical properties of the separator can be enhanced, the occurrence of an electrical short-circuit of an electrode attributable to the contraction of the separator at a high temperature can be prevented, and pores can be formed within the coating layer.

According to an embodiment of the present disclosure, the coating layer 130 may be formed as the inorganic matter particles 133 are settled by the first polymer binder 131 and integrated within a side thereof. The pore within the coating layer 130 may be caused by an interstitial volume, that is, an empty space between the inorganic matter particles 133.

According to an embodiment of the present disclosure, the coating layer includes a plurality of pores. That is, the coating layer may be porous.

According to an embodiment of the present disclosure, the first polymer binder 131 may be an acrylic binder, a polyvinylidene-based binder, and a combination of them. By selecting the first polymer binder 131 from those described above as described above, heat resistance of the coating layer can be improved, and a bonding force of the inorganic matter particles within the coating layer can be enhanced.

According to an embodiment of the present disclosure, the first polymer binder 131 may be an acrylic binder. The porosity of the separator can be maintained. The ease of the manufacturing of a battery can be improved by improving an adhesive force between the electrode and the separator in a lamination process of the battery. A stacking process can be stably implemented.

According to an embodiment of the present disclosure, the acrylic binder is a polymer including carboxylic acid ester as a repetition unit, and preferably may be (meta)acrylic ester or an acryl-styrene copolymer.

According to an embodiment of the present disclosure, the (meth)acrylic ester may be methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acylate, decyl (meth)acrylate, hydroxymethyl (meth)acrylate, hydroxyethyl (meth)acrylate, ethylene glycol (meth)acrylate, ethylene glycol di(meth)acrylate, prolylene glycol di(meth)acrylate, trimethylolpropane tri(meth)acrylate, pentaerythritol tetra (meth) acrylate, dipentaerythritol hexa (meth) acrylate, allyl (meth)acrylate, ethylene di(meth) acrylate, etc., and may be one type or more selected from among them. Among them, one type or more selected from methyl (meth)acrylate, ethyl (meth)acrylate and 2-ethylhexyl (meth)acrylate are preferred, and methyl (meth)acrylate is particularly preferred.

According to an embodiment of the present disclosure, the acryl-styrene copolymer may include an acrylic binder. The acrylic binder may be polyacrylate series. For example, the binder may be one type or more selected from a group consisting of styrenebutadiene rubber, nitril-butadiene rubber, acrylonitrile-butadiene rubber, acrylonitrile-butadiene-styrene rubber, and an acylatebased polymer, and particularly, may be a copolymer including acylate.

According to an embodiment of the present disclosure, the polyvinylidene-based binder included in the first polymer binder 131 may be a polyvinylidene difluoride (PVdF)-based binder. By selecting the polyvinylidene fluoride-based binder as the polyvinylidene-based binder as described above, resistance of the separator can be reduced.

According to an embodiment of the present disclosure, the polyvinylidene-based binder included in the first polymer binder 131 may be a polyvinylidene difluoride (PVdF)-based binder. By selecting the polyvinylidene-based binder as the polyvinylidene fluoride-based binder as described above, resistance of the separator can be reduced.

According to an embodiment of the present disclosure, the polyvinylidene-based binder may be a copolymer (vinylidene fluoride-co-hexafluoropropylene) (PVdF-co-HFP) of polyvinylidene fluoride and hexafluoropropylene. By selecting the copolymer of polyvinylidene fluoride and hexafluoropropylene as the polyvinylidene-based binder as described above, the dissolution of a polymer binder attributable to an electrolyte can be minimizeed.

According to an embodiment of the present disclosure, the polyvinylidene-based binder included in the first polymer binder 131 may include hexafluoropropylene having a content of 10 wt% or more. Specifically, the polyvinylidene-based binder included in the first polymer binder 131 may include hexafluoropropylene having a content of 10 wt% or more to 80 wt% or less, 15 wt% or more to 75 wt% or less, 20 wt% or more to 70 wt% or less, 25 wt% or more to 65 wt% or less, 30 wt% or more to 60 wt% or less, 35 wt% or more to 55 wt% or less, or 40 wt% or more to 50 wt% or less. By adjusting the content of hexafluoropropylene included in the polyvinylidene-based binder of the first polymer binder 131 in the aforementioned range, resistance of the separator can be reduced.

According to an embodiment of the present disclosure, the first polymer binder 131 may be a mixed binder particle including an acrylic binder and a polyvinylidene-based binder. as described above, By selecting the mixed binder particle including the acrylic binder and the polyvinylidene-based binder as the first polymer binder 133, an adhesive force with an electrode can be improved.

According to an embodiment of the present disclosure, the first polymer binder 131 may be a particle type or a liquid type. By selecting the first polymer binder 131 from those described above, the porosity and air permeability of the coating layer can be adjusted, the size of the pore of the coating layer can be adjusted, and the mechanical properties of the coating layer can be improved.

According to an embodiment of the present disclosure, the content of the first polymer binder 131 may be 30 parts by weight or less with respect to 100 parts by weight of the coating layer. Specifically, the content of the first polymer binder 131 may be more than 0 parts by weight to 30 parts by weight or less, 5 parts by weight or more to 25 parts by weight or less, 10 parts by weight or more to 20 parts by weight or less, 12 parts by weight or more to 18 parts by weight or less, or 13 parts by weight or more to 16 parts by weight or less with respect to 100 parts by weight of the coating layer 130. By adjusting the content of the first polymer binder 131 in the aforementioned range, the mechanical properties of the coating layer 130 can be improved, the porosity of the coating layer 130 can be maintained, and heat resistance thereof can be improved.

According to an embodiment of the present disclosure, the content of the inorganic matter particles 133 may be 70 parts by weight or more with respect to 100 parts by weight of the coating layer 130. Specifically, the content of the inorganic matter particles 133 may be more than 70 parts by weight to less than 100 parts by weight, 75 parts by weight or more to 95 parts by weight or less, 80 parts by weight or more to 90 parts by weight or less, 82 parts by weight or more to 88 parts by weight or less, or 84 parts by weight or more to 86 parts by weight or less with respect to 100 parts by weight of the coating layer 130. By adjusting the content of the inorganic matter particles 133 in the aforementioned range, heat resistance of the separator and mechanical properties thereof can be improved.

According to an embodiment of the present disclosure, the inorganic matter particle 133 which may be used in the coating layer 130 is not specially limited if the inorganic matter particle is electrically and chemically stable. That is, an inorganic matter particle which may be used in an embodiment of the present disclosure is not specially limited if the inorganic matter particle does not generate an oxidation and/or reduction reaction in an operating voltage range (e.g., 0 V to 5 V on the basis of Li/Li⁺) of an electrochemical device to which the inorganic matter particle is applied.

According to an embodiment of the present disclosure, unconstrained examples of the inorganic matter particles 133 may include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃(PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), antimony penta-oxide (Sb₂O₅), a zeolite-based compound, etc., and the inorganic matter particles 133 may include one or two or more of them.

According to an embodiment of the present disclosure, the zeolite-based compound may be any one selected from a group consisting of zeolite A, zeolite X, zeolite Y, zeolite L, ZSM-5, beta-zeolite, ZSM-8, ZSM-11, and a combination of them. The zeolite-based compound may have a high specific surface area. By selecting the zeolite-based compound from those described above, the ability to adsorb a gas and transition metal can be improved.

According to an embodiment of the present disclosure, an average diameter D₅₀ of the inorganic matter particles 133 is not specially limited, but it is preferred that the average diameter is in the range of 0.3 *µ*m or more to 1 *µ*m or less in order to form the coating layer having a uniform thickness and for the proper porosity of the coating layer. Specifically, when the average diameter is less than 0.3 *µ*m, the dispersibility of the inorganic matter particle in slurry that is prepared for the manufacturing of the coating layer may be reduced. When the average diameter is greater than 1 *µ*m, the thickness of the coating layer that is formed may be increased.

In this specification, a "D50 grain diameter" means a grain diameter at a point 50% of a particle number accumulation distribution according to the grain diameter. The grain diameter may be measured by using a laser diffraction method. Specifically, a distribution of the sizes of particles is calculated by dispersing powder to be measured in a dispersion medium, then introducing the power into a commercial laser diffraction particle size measuring device (e.g., Microtrac S3500), and measuring a difference between diffraction patterns according to the sizes of the particles when the particles pass through a laser beam. The D50 grain diameter may be measured by calculating a particle diameter at a point at which a particle number accumulation distribution according to the grain diameter in the measuring device becomes 50%.

FIG. 2 is a schematic diagram of a separator for an electrochemical device according to an embodiment of the present disclosure. The separator for an electrochemical device, that is, an embodiment of the present disclosure, is described in detail with reference to FIG. 2.

According to an embodiment of the present disclosure, the separator 100 for an electrochemical device may include a bonding layer 150 provided on the coating layer 130. Specifically, the separator 100 for an electrochemical device may include the bonding layer 150 that is provided on the coating layer 130 and that includes a second polymer binder 151 (not illustrated). As the separator 100 for an electrochemical device includes the bonding layer 150 provided on the coating layer 130 as described above, an adhesive force between an electrode and the separator in a lamination process with the electrode of the separator can be secured.

According to an embodiment of the present disclosure, the thickness of the coating layer 130 may be 2.0 *µ*m or less with respect to any one side of the porous polymer base 110. Specifically, the thickness of the coating layer 130 may be more than 0 *µ*m to 2.0 *µ*m or less, 0.1 *µ*m or more to 1.9 *µ*m or less, 0.2 *µ*m or more to 1.8 *µ*m or less, 0.3 *µ*m or more to 1.7 *µ*m or less, 0.4 *µ*m or more to 1.6 *µ*m or less, 0.5 *µ*m or more to 1.5 *µ*m or less, 0.6 *µ*m or more to 1.4 *µ*m or less, 0.7 *µ*m or more to 1.3 *µ*m or less, 0.8 *µ*m or more to 1.2 *µ*m or less, or 0.9 *µ*m or more to 1.1 *µ*m or less. By adjusting the thickness of the coating layer 130 to the aforementioned range, heat resistance of the separator can be improved, and energy density of the separator can be increased.

According to an embodiment of the present disclosure, the second polymer binder 151 may be an acrylic binder, a polyvinylidene-based binder, and a combination of them. By selecting the second polymer binder 151 from those described above as described above, the adhesiveness of the bonding layer can be improved.

According to an embodiment of the present disclosure, the second polymer binder 151 may be an acrylic binder. The porosity of the separator can be maintained. The ease of the manufacturing of a battery can be improved by improving an adhesive force between an electrode and the separator in a lamination process of the battery. A stacking process can be stably implemented.

According to an embodiment of the present disclosure, the acrylic binder is a polymer including carboxylic acid ester as a repetition unit, and preferably may be (meta)acrylic ester or an acryl-styrene copolymer.

According to an embodiment of the present disclosure, the (meth)acrylic ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acylate, decyl (meth)acrylate, hydroxymethyl (meth)acrylate, hydroxyethyl (meth)acrylate, ethylene glycol (meth)acrylate, ethylene glycol di(meth)acrylate, prolylene glycol di(meth)acrylate, trimethylolpropane tri(meth)acrylate, pentaerythritol tetra (meth) acrylate, dipentaerythritol hexa (meth) acrylate, allyl (meth)acrylate, ethylene di(meth) acrylate, etc., and may be one type or more selected from among them. Among them, one type or more selected from methyl (meth)acrylate, ethyl (meth)acrylate, and 2-ethylhexyl (meth)acrylate is preferred, and methyl (meth)acrylate is particularly preferred.

According to an embodiment of the present disclosure, the acryl-styrene copolymer may include an acrylic binder. The acrylic binder may be polyacrylate series. For example, the binder may be one type or more selected from a group consisting of styrenebutadiene rubber, nitril-butadiene rubber, acrylonitrile-butadiene rubber, acrylonitrile-butadiene-styrene rubber, and an acylate-based polymer, and may be specifically a copolymer including acylate.

According to an embodiment of the present disclosure, the polyvinylidene-based binder included in the second polymer binder 151 may be a polyvinylidene difluoride (PVdF)-based binder. By selecting the polyvinylidene-based binder as polyvinylidene fluoride-based binder as described above, resistance of the separator can be reduced.

According to an embodiment of the present disclosure, the polyvinylidene-based binder included in the second polymer binder 151 may be a polyvinylidene difluoride (PVdF)-based binder. By selecting the polyvinylidene-based binder as polyvinylidene fluoride-based binder as described above, resistance of the separator can be reduced.

According to an embodiment of the present disclosure, the polyvinylidene-based binder may be a copolymer (vinylidene fluoride-co-hexafluoropropylene) (PVdF-co-HFP) of polyvinylidene fluoride and hexafluoropropylene. By selecting that the polyvinylidene-based binder is the copolymer of polyvinylidene fluoride and hexafluoropropylen as described above, the dissolution of a polymer binder attributable to an electrolyte can be minimizeed.

According to an embodiment of the present disclosure, the polyvinylidene-based binder included in the second polymer binder 151 may be hexafluoropropylene having a content of 10 wt% or more. Specifically, the polyvinylidene-based binder included in the first polymer binder 131 may be hexafluoropropylene having a content of 10 wt% or more to 80 wt% or less, 15 wt% or more to 75 wt% or less, 20 wt% or more to 70 wt% or less, 25 wt% or more to 65 wt% or less, 30 wt% or more to 60 wt% or less, 35 wt% or more to 55 wt% or less, or 40 wt% or more to 50 wt% or less. By adjusting the content of hexafluoropropylene included in the polyvinylidene-based binder of the first polymer binder 131 in the aforementioned range, resistance of the separator can be reduced. Content of hexafluoropropylene (HFP) monomer may be measured as ¹H-NMR and/or ¹⁹F-NMR.

According to an embodiment of the present disclosure, the second polymer binder 151 may be a mixed binder particle including an acrylic binder and a polyvinylidene-based binder. By selecting the mixed binder particle including the acrylic binder and the polyvinylidene-based binder as the second polymer binder 151 as described above, an adhesive force with an electrode can be improved.

According to an embodiment of the present disclosure, the second polymer binder 151 may be a particle type or a liquid type. By selecting the second polymer binder 151 from those described above, the porosity and air permeability of the bonding layer can be adjusted, the size of the pore of the bonding layer can be adjusted, and an adhesive force of the bonding layer can be improved.

According to an embodiment of the present disclosure, it is preferred that the grain diameter D50 of the second polymer binder is in the range of 0.3 *µ*m or more to 1 *µ*m or less. Specifically, when the grain diameter D50 is less than 0.3 *µ*m, the dispersibility of the second polymer binder in slurry that is prepared for the manufacturing of the bonding layer may be reduced. When the grain diameter D50 is greater than 1 *µ*m, the thickness of the bonding layer that is formed may be increased.

According to an embodiment of the present disclosure, the thickness of the bonding layer 150 may be 2.0 *µ*m or less. Specifically, the thickness of the bonding layer 150 may be more than 0 *µ*m to 2.0 *µ*m or less, 0.1 *µ*m or more to 1.9 *µ*m or less, 0.2 *µ*m or more to 1.8 *µ*m or less, 0.3 *µ*m or more to 1.7 *µ*m or less, 0.4 *µ*m or more to 1.6 *µ*m or less, 0.5 *µ*m or more to 1.5 *µ*m or less, 0.6 *µ*m or more to 1.4 *µ*m or less, 0.7 *µ*m or more to 1.3 *µ*m or less, 0.8 *µ*m or more to 1.2 *µ*m or less, or 0.9 *µ*m or more to 1.1 *µ*m or less. By adjusting the thickness of the bonding layer 150 to the aforementioned range, the adhesiveness of the separator with an electrode can be improved, and energy density of the separator can be increased.

In this specification, the "air permeability of the separator" may be measured by using EG01-55-1MR equipment of Asahi Seico Co., Ltd.

An embodiment of the present disclosure provides a method of manufacturing a separator for an electrochemical device, including a step of mulling a mixture including polyolefin-based resin, inorganic matter particles, and diluents at a high temperature; extruding the mulled mixture; a step of separating the phases of the diluents by cooling the extruded mixture; a step of forming pores by extracting the diluents; and a step of manufacturing a porous polymer base by stretching and heat-fixing the mixture in which the pores have been formed.

The method of manufacturing an electrochemical device according to an embodiment of the present disclosure can easily prevent a rise of resistance of a separator, and can improve energy density of a battery by manufacturing the separator as a thin film. In the method of manufacturing the separator for an electrochemical device according to an embodiment of the present disclosure, contents that are redundant with the description of the separator for an electrochemical device are omitted.

An embodiment of the present disclosure provides a method of manufacturing a separator for an electrochemical device, including a step of applying slurry for the coating layer including the first polymer binder 131 and the inorganic matter particles 133 on at least one surface of the porous polymer base 110 and a step of applying slurry for the bonding layer including the second polymer binder 151.

According to an embodiment of the present disclosure, the method of manufacturing an electrochemical device includes a step of applying the slurry for the coating layer including the first polymer binder 131 and the inorganic matter particles 133 on at least one surface of the porous polymer base 110. By including applying the slurry for the coating layer on at least one surface of the porous polymer base as described above, the coating layer can be formed by one application. Heat resistance of the separator can be improved and a solvent can be easily evaporated because the inorganic matter particles are present in an excessive amount in the slurry for the coating layer.

According to an embodiment of the present disclosure, prior to the step of applying the slurry for the coating layer, the slurry may be provided by manufacturing a polymer solution by dissolving the first polymer binder in a proper solvent. A solvent having a solubility index similar to that of a binder polymer to be used and having a low boiling point is preferred. This is for easily removing the solvent after uniform mixing. Unconstrained examples of an available solvent include acetone, tetrahydrofuran, methylene chloride, chloroform, dimethylformamide, N-methyl-2-pyrrolidone (NMP), cyclohexane, water, or a mixture of them.

According to an embodiment of the present disclosure, prior to the step of applying the slurry for the coating layer, the slurry may be provided by manufacturing polymer emulsion by dispersing the first polymer binder in a proper dispersion medium. A dispersion medium having a low boiling point is preferred. This is for easily removing the dispersion medium after uniform mixing. Unconstrained examples of an available dispersion medium include acetone, tetrahydrofuran, methylene chloride, chloroform, dimethylformamide, N-methyl-2-pyrrolidone (NMP), cyclohexane, water, or a mixture of them.

According to an embodiment of the present disclosure, inorganic matter particles may be added to and dispersed in the polymer emulsion or the polymer solution. The content ratio of the inorganic matter particles and the polymer binder particles is the same as that described above, and may be properly adjusted by considering the thickness of the coating layer that is finally manufactured and the size and porosity of the pore according to an embodiment of the present disclosure.

**According** to an embodiment of the present disclosure, a content of the solid content of the slurry for the coating layer may be 10 wt% or more to 30 wt% or less. Specifically, the content of the solid content of the slurry for the coating layer may be 11 wt% or more to 29 wt% or less, 12 wt% or more to 28 wt% or less, 13 wt% or more to 27 wt% or less, 14 wt% or more to 26 wt% or less, 15 wt% or more to 25 wt% or less, 16 wt% or more to 24 wt% or less, 17 wt% or more to 23 wt% or less, 18 wt% or more to 22 wt% or less, or 19 wt% or more to 21 wt% or less. By adjusting the content of the solid content of the slurry for the coating layer in the aforementioned range, a rise of resistance of the separator can be prevented, and energy density of a battery can be improved by manufacturing the separator as a thin film.

According to an embodiment of the present disclosure, a method of applying the slurry for the coating layer on a surface of the porous polymer base 110 is not specially limited to any one method, but a common method that has been known in the industry may be used as the method. For example, various methods, such as dip coating, die coating, roll coating, comma coating, or a mixed method of them, may be used as the method.

According to an embodiment of the present disclosure, the method of manufacturing an electrochemical device includes a step of applying the slurry for the bonding layer including the second polymer binder 151. By including the step of applying the slurry for the bonding layer including the second polymer binder 151 as described above, the bonding layer can be easily formed.

According to an embodiment of the present disclosure, the method of applying the slurry for the bonding layer on the surface of the porous polymer base 110 is not specially limited to any one method, but a common method that has been known in the industry may be used as the method. For example, various methods, such as dip coating, die coating, roll coating, comma coating, or a mixed method of them, may be used as the method.

According to an embodiment of the present disclosure, the slurry for the bonding layer may further include a dispersion medium. The dispersion medium may be water. The second polymer binder can be uniformly dispersed because the slurry for the bonding layer further includes the dispersion medium as described above.

According to an embodiment of the present disclosure, the method of manufacturing an electrochemical device may include a step of including the coating layer by drying the slurry for the coating layer. By including the step of including the coating layer by drying the slurry for the coating layer as described above, damage to the coating layer can be minimized, and a solvent included in the slurry or the dispersion medium can be easily removed.

According to an embodiment of the present disclosure, the method of manufacturing an electrochemical device may include a step of including the bonding layer by drying the slurry for the bonding layer. By including the step of including the bonding layer by drying the slurry for the bonding layer as described above, damage to the bonding layer can be minimized, and the dispersion medium included in the slurry can be easily removed.

According to an embodiment of the present disclosure, the method of manufacturing an electrochemical device may include a step of including the coating layer and the bonding layer by drying the slurry for the bonding layer after applying and drying the slurry for the coating layer. By including the step of including the coating layer and the bonding layer by drying the slurry for the bonding layer after applying and drying the slurry for the coating layer as described above, the coating layer and the bonding layer can be easily formed.

According to an embodiment of the present disclosure, in the dry process, time conditions are properly set so that the occurrence of a defect on a surface of the coating layer is minimized. A dry-assistant device, such as a dry oven or hot air, may be used for the dry within a proper range.

According to an embodiment of the present disclosure, the separator is manufactured as an electrode assembly by a lamination process of interposing the separator between a negative electrode and a positive electrode and binding them by applying heat and/or pressure. In an embodiment of the present disclosure, the lamination process may be performed by a roll press device including a pair of pressurization rollers. That is, interlayer binding may be achieved by sequentially stacking the negative electrode, the separator, and the positive electrode and inputting them between the pressurization rollers. In this case, the lamination process may be performed by a hot pressurization method.

An embodiment of the present disclosure provides an electrochemical device including a positive electrode 300; a negative electrode 500; and the separator 100. The separator 100 is a separator for an electrochemical device, which is interposed between the positive electrode 300 and the negative electrode 500.

The electrochemical device according to an embodiment of the present disclosure can improve performance of a battery and extend the lifespan of the battery.

FIG. 3 is a schematic diagram of the electrochemical device according to an embodiment of the present disclosure. The electrochemical device that is an embodiment of the present disclosure is described in detail with reference to FIG. 3.

In this specification, the electrochemical device is a device that converts chemical energy into electrical energy by an electrochemical reaction, and is a concept that includes a primary battery and a secondary battery. In this specification, the secondary battery is capable of being charged and discharged, and means a lithium secondary battery, a nickel cadmium battery, a nickel-hydrogen battery, etc. The lithium secondary battery uses lithium ions as an ion conductor. A nonaqueous electrolyte secondary battery including a liquid electrolyte, an all-solid-state battery including a solid electrolyte, a lithium polymer battery including a gel polymer electrolyte, a lithium metal battery using lithium metal as a negative electrode, etc. may be taken as examples of the lithium secondary battery, but the present disclosure is not limited thereto.

According to an embodiment of the present disclosure, the positive electrode includes a positive electrode current collector, and a positive electrode active material layer including a positive electrode active material, a conductive material, and binder resin on a surface of the current collector at least on one side thereof. The positive electrode active material may include one or a mixture of two or more, among a layered compound, such as lithium manganese composite oxide (LiMn₂O₄, LiMnO₂, etc.), lithium cobalt oxide (LiCoO₂), or lithium nickel oxide (LiNiO₂), or a compound substituted with one or more of transition metal; lithium manganese oxide, such as Chemical Formula Li₁₊ₓMn₂₋ₓO₄ (wherein x is 0 to 0.33), LiMnO₃, LiMn₂O₃, LiMnO₂, etc.; lithium copper oxide (Li₂CuO₂); vanadium oxide, such as LiV₃O₈, LiV₃O₄, V₂O₅, Cu₂V₂O₇, etc.; Ni site-type lithium nickel oxide that is represented as Chemical Formula LiNi₁₋ₓMₓO₂ (wherein M = Co, Mn, Al, Cu, Fe, Mg, B, or Ga, and x = 0.01 to 0.3); lithium manganese composite oxide that is represented as Chemical Formula LiMn₁-xMₓO₂ (wherein M = Co, Ni, Fe, Cr, Zn, or Ta, and x = 0.01 to 0.1) or Li₂Mn₃MO₈ (wherein M = Fe, Co, Ni, Cu, or Zn 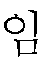 ); LiMn₂O₄ in which some of Li in Chemical Formula has been substituted with alkaline earth metal ions; a disulfide compound; and Fe₂(MoO₄)₃.

According to an embodiment of the present disclosure, the negative electrode includes a negative electrode current collector and a negative electrode active material layer including a negative electrode active material, a conductive material, and binder resin on a surface of the current collector at least on one side thereof. The negative electrode may include one type or a mixture of two or more, among carbon, such as lithium metal oxide, non-graphite carbon, or graphite-based carbon; metal composite oxide, such as LixFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, Group 2, and Group 3 elements of the periodic table, halogen; 0<x≤1; 1≤y≤3; 1≤z≤8); lithium metal; a lithium alloy; a silicon-based alloy; a tin-based alloy; metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; an Li-Co-Ni-based material; and titanium oxide, as the negative electrode active material.

According to an embodiment of the present disclosure, the conductive material may be any one selected from a group consisting of graphite, carbon black, carbon fiber, metal fiber, metal powder, conductive whisker, conductive metal oxide, activated carbon, and a polyphenylene derivative, for example, or a mixture of two or more conductive materials of them. More specifically, the conductive material may be one type selected from a group consisting of natural graphite, synthetic graphite, super-p, acetylene black, ketjen black, channel black, furnace black, lamp black, summer black, denka black, aluminum powder, nickel powder, zinc oxide, potassium titanate, and titanium oxide or a mixture of two or more conductive materials of them.

According to an embodiment of the present disclosure, the current collector is not specially limited if a current collector has high conductivity without causing a chemical change in a corresponding battery. For example, a current collector in which stainless steel, copper, aluminum, nickel, titanium, calcined carbon, aluminum, or stainless steel has been surface-treated with carbon, nickel, titan, silver, etc. may be used.

According to an embodiment of the present disclosure, a polymer that is commonly used in an electrode in the industry may be used as the binder resin. Unconstrained examples of such binder resin may include polyvinylidene fluoride-co-hexafluoropropylene, polyvinylidene fluoride-cotrichloroethylene, polymethylmethacrylate, polyetylexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, and carboxyl methyl cellulose, but the present disclosure is not limited thereto.

In the present disclosure, positive electrode slurry for manufacturing the positive electrode active material layer may include a dispersant. The dispersant may be a pyrrolidone-based compound. Specifically, the dispersant may be N-methylpyrrolidone (ADC-01, LG Chemical Corporation).

According to an embodiment of the present disclosure, a content of the dispersant included in the positive electrode slurry may be more than 0 parts by weight to 0.5 parts by weight or less with respect to 100 parts by weight of the positive electrode slurry. Specifically, the content of the dispersant included in the positive electrode slurry may be more than 0.05 parts by weight to 0.4 parts by weight or less with respect to 100 parts by weight of the positive electrode slurry.

According to an embodiment of the present disclosure, negative electrode slurry for manufacturing the negative electrode active material layer may include a dispersant. The dispersant may be a polypyrrolidone-based compound. Specifically, the dispersant may be polyvinylpyrrolidone (Junsei Chemical Co., Ltd. of Japan).

According to an embodiment of the present disclosure, the content of the dispersant included in the negative electrode slurry may be more than 0 parts by weight to 0.5 parts by weight or less with respect to the negative electrode slurry 100 parts by weight. Specifically, the content of the dispersant included in the negative electrode slurry may be more than 0.05 parts by weight to 0.4 parts by weight or less with respect to the negative electrode slurry 100 parts by weight.

According to an embodiment of the present disclosure, a battery may be manufactured by inserting the electrochemical device that has been prepared as described into a proper case and injecting an electrolyte.

According to an embodiment of the present disclosure, the electrolyte is a salt having a structure such as that of A⁺B⁻, which is obtained by dissolving or dissociating a salt in which A⁺ includes ions composed of alkali metallic cations, such as Li⁺, Na⁺, or K⁺, or a combination of them and B⁻ includes ions composed of anions, such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination of them, in an organic solvent consisting of propylene carbonate (PC), ethylene carbonate (EC), diethyl carbonate (DEC), dimethyl carbonate (DMC), dipropylcarbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), or gamma butyrolactone (γ-butyrolactone) or a mixture of them, but the present disclosure is not limited thereto only.

An embodiment of the present disclosure provides a battery module that includes a battery including the electrochemical device as a unit battery, a battery pack including the battery module, and a device including the battery pack as a power source. Detailed examples of the device may include a power tool that is moved by power from a battery motor; an electric vehicle including an electric vehicle (EV), a hybrid electric vehicle (HEV), a plug-in hybrid electric vehicle (PHEV), etc.; an electric two-wheel vehicle including an electric bicycle (E-bike) and an electric scooter (E-scooter); an electric golf cart; a system for power storage, etc., but the present disclosure is not limited thereto.

According to an embodiment of the present disclosure, the first part of the separator may be disposed to face the positive electrode, and the second part of the separator may be disposed to face the negative electrode. Specifically, the first part of the separator may be formed to neighbor the positive electrode, and the second part of the separator may be formed to neighbor the negative electrode. By implementing the first part of the separator to be disposed to face the positive electrode and the second part of the separator to be disposed to face the negative electrode as described above, trapping efficiency of transition metal ions that are generated from the positive electrode can be improved, and the pore can be prevented from being obstructed.

### [Mode for Invention]

Hereinafter, embodiments are described in detail in order to describe the present disclosure in detail. However, the embodiments according to the present disclosure may be modified in various other forms, and the scope of the present disclosure is not construed as being limited to embodiments described hereinafter. The embodiments of this specification are provided to a person having ordinary knowledge in the art to more fully describe the present disclosure.

### <Embodiment 1>

### (1) Manufacturing of separator

A first mixture in which polyethylene (a weight-average molecular weight 900,000) and Al₂O₃ powder having the D50 grain diameter of 600 nm as inorganic matter particles were mixed at a weight ratio of 80:20 was coextruded as the first part. A second mixture in which polyethylene (a weight-average molecular weight 900,000) and Al₂O₃ powder having the D50 grain diameter of 600 nm as inorganic matter particles were mixed at a weight ratio of 95:5 was coextruded as the second part. The porous polymer base (a total thickness: 8 *µ*m, the thickness of the first part: 4 *µ*m, the thickness of the second part: 4 *µ*m, the porosity of the first part: 60 vol%, and the porosity of the second part: 45 vol%) of a polyolefin-based resin material was manufactured by a wet method by adjusting a stretching temperature to 105°C and a heat fixation temperature to 130°C.

### (2) Manufacturing of positive electrode

Slurry for a positive electrode active material layer having a 50 wt% concentration of the remaining components except water was prepared by mixing the positive electrode active material (LiNi0.8Mn0.1Co0.1O2), a conductive material (carbon black), a dispersant (N-methylpyrrolidone, ADC-01, LG Chemical Corporation), and binder resin (PVDF-HFP and PVDF mixed) with water at a weight ratio of 97.5:0.7:0.14:1.66. Next, a positive electrode having the positive electrode active material layer (a thickness of 120 *µ*m ) was manufactured by applying the slurry on a surface of an aluminum thin film (a thickness of 10 *µ*m) and drying the slurry.

### (3) Manufacturing of negative electrode

Slurry for a negative electrode active material layer having a 50 wt% concentration of the remaining components except water was prepared by mixing graphite (natural graphite and synthetic graphite mixed), a conductive material (carbon black), a dispersant (Polyvinylpyrrolidone, Junsei Chemical Co., Ltd. of Japan), and binder resin (PVDF-HFP and PVDF mixed) at a weight ratio of 97.5:0.7:0.14:1.66. Next, a negative electrode having the negative electrode active material layer (a thickness of 120 *µ*m) was manufactured by applying the slurry on a surface of a copper thin film (a thickness of 10 *µ*m) and drying the slurry.

### (4) Lamination process

An electrochemical device was obtained by interposing the separator of the embodiment between the manufactured negative electrode and positive electrode and performing a lamination process. The first part of the separator was interposed to neighbor the positive electrode. The lamination process was performed under conditions of 70°C and 5.2 MPa for 10 seconds by using a hot press.

### <Embodiment 2>

**An** electrochemical device was manufactured identically with Embodiment 1 except that the porosity of the first part was 45 vol% and the porosity of the second part was 60 vol% in Embodiment 1.

### <Embodiment 3>

**An** electrochemical device was manufactured identically with Embodiment 1 except that the porosity of the first part was 50 vol% and the porosity of the second part was 50 vol% in Embodiment 1.

### <Comparative Example 1>

**An** electrochemical device was manufactured identically with Embodiment 1 except that a separator was manufactured as follows 1 and the separator in Comparative Example 1 was interposed between the manufactured negative electrode and positive electrode.

### (1) Manufacturing of separator

A porous polymer base (a total thickness: 8 *µ*m) of a polyolefin-based resin material was manufactured by a wet method by extruding a mixture in which polyethylene (a weight-average molecular weight 900,000) and Al₂O₃ powder having the D50 grain diameter of 600 nm as inorganic matter particles were mixed at a weight ratio of 80:20 and adjusting a stretching temperature to 105 °C and a heat fixation temperature to 130°C.

### <Comparative Example 2>

**A** separator was manufactured as in Embodiment 1, and an electrochemical device was manufactured identically with Embodiment 1 except that the positive electrode and the second part of the separator are interposed so that the second part comes into contact with the positive electrode.

### <Experiment Example 1: Measuring of air permeability of separator>

**In** the manufacturing process in Embodiment 1 and Comparative Examples 1 and 2, the air permeability (Gurlye) of the manufactured separator was measured by an ASTM D-2873 method. The Gurlye value was measured by using Gurley type Densometer (No.158) by Toyoseiki according to the JIS Gurlye measuring method. The air permeability value was indicated as time (second), that is, the air permeation time that is taken for the air of 100 ml to pass through a cross section of the separator 1 in² under pressure of 12.2 in H₂O.

### <Experiment Example 2: Measuring of breakdown voltage>

**A** breakdown voltage was measured by using an AC/DC/IR Hi-Pot tester.

A separator sample that was cut 5 X 5 cm was placed between aluminum jigs (an upper jig diameter 30 mm and a lower jig 50 x 100 mm). A voltage at which fail conditions (> 0.5 mA, 3 sec) occurred was measured by a Hi-pot tester. At this time, measuring conditions were set as DC, a current of 0.5 mA, and a voltage increase of 100 V/s (up to 3 kV). The measured value was indicated as an average value of 30 samples.

### <Experiment Example 3: short-circuit failure upon assembly>

If a voltage of 50 V was applied to the electrochemical device in Embodiment 1 and Comparative Examples 1 and 2 for 0.1 second, when a flowing current was 0.5 mA or more, it was determined as a short-circuit failure. 10 electrochemical devices in each of Embodiment 1 and Comparative Examples 1 and 2 were manufactured, and whether a short-circuit failure occurred in each of the 10 electrochemical devices was determined.

### <Experiment Example 4: Measuring of cycle capacity retention rate>

**A** lifespan characteristic was measured 300 times while performing 1.0 C charging and 1.0 C discharging after charging and discharging the electrochemical devices in Embodiment 1 and Comparative Examples 1 and 2 once at 0.1 C in a voltage region of 3.0 V to 4.4 V in a 25°C chamber. In this case, the lifespan characteristic was indicated as a capacity retention rate by the calculation of the ratio of a discharging capacity after 300 cycles compared to the first discharging capacity.

### <Experiment Example 5: Resistance increase rate>

The rate of increase for DCIR resistance before and after 300 cycles was measured with respect to the electrochemical devices in Embodiment 1 and Comparative Examples 1 and 2. In this case, the DCIR resistance was a value obtained by measuring the resistance upon discharging for 10 seconds at 2.5 C in a state of charge (SOC) 50%.

**[Table 1]**

| | Air permeabil ity (sec/100c c) of separator | Breakdown voltage (V) | Short-circuit failure upon assembly | Cycle capacity retention rate@300c ycle (%) | Rate of increase of resistanc e (before and after cycle) (% ) |
|---|---|---|---|---|---|
| Embodiment 1 | 65 | 4,521 | 0/10 | 93 | 3.4 |
| Embodiment 2 | 65 | 4,518 | 0/10 | 85 | 8.1 |
| Embodiment 3 | 68 | 4,573 | 0/10 | 90 | 6.1 |
| Comparative Example 1 | 47 | 2,263 | 3/10 | 87 | 5.2 |
| Comparative Example 2 | 65 | 4,521 | 0/10 | 85 | 8.2 |

Referring to Table 1, it was checked that Comparative Example 1 is not appropriate to be used as a separator because Comparative Example 1 has a problem with an insulating property because the porosity of the separator is excessively high. Moreover, it was checked that in Comparative Example 2, performance of the electrochemical device is degraded because metal ions generated when facing the positive electrode are accumulated on the porous polymer base having low porosity.

In contrast, it was checked that Embodiments 1 to 3 implement proper ventilation and do not degrade performance of the electrochemical device compared to Comparative Examples because the separator including the first part and the second part in each of which the pores each having a proper size have been formed are used.

**As** a result, the separator for an electrochemical device according to an embodiment of the present disclosure can prevent the pore from being obstructed by adjusting the size of the pore at a part spaced apart from a part that neighbors the positive electrode, the porosity of the pore, and a content of inorganic matter particles, and can prevent the degradation of a battery and enhance the lifespan of the battery by improving trapping efficiency of transition metal ions that are generated from the positive electrode.

### [Description of reference numerals]

100: separator for electrochemical device
110: porous polymer base
111: first part
113: second part
130: coating layer
131: first polymer binder
133: inorganic matter particle
150: bonding layer
151: second polymer binder
300: positive electrode
500: negative electrode

## Claims

1. A separator for an electrochemical device,wherein:
the separator comprises a porous polymer base comprising inorganic matter particles and comprises a first part that neighbors one surface of the porous polymer base and a second part that faces the first part,
a weight of inorganic matter particles included in the first part is greater than a weight of inorganic matter particles included in the second part, and
the inorganic matter particles are capable of adsorbing transition metal ions.

2. The separator of claim 1, wherein the inorganic matter particle is one selected from a group consisting of zeolite, silica gel, carbon fiber, porous carbon, porous metal oxide, a metal-organic framework (MOF), and a combination of them.

3. The separator of claim 1, wherein the inorganic matter particles included in the first part and the inorganic matter particles included in the second part are identical with each other or different from each other.

4. The separator of claim 1, wherein the porous polymer base is polyolefin-based resin.

5. The separator of claim 1, wherein a size of a pore included in the first part is greater than a size of a pore included in the second part.

6. The separator of claim 1, wherein:
a size of a pore included in the first part is 20 *µ*m or more to 100 *µ*m or less, and
a size of a pore included in the second part is 20 *µ*m or more to 100 *µ*m or less.

7. The separator of claim 1, wherein a porosity of the first part is greater than a porosity of the second part.

8. The separator of claim 1, wherein:
a porosity of the first part is 50 vol% or more to 70 vol% or less, and
a porosity of the second part is 40 vol% or more to 50 vol% or less.

9. The separator of claim 1, wherein a thickness of the first part is equal to or smaller than a thickness of the second part.

10. The separator of claim 1, wherein the first part is provided to neighbor a positive electrode.

11. The separator of claim 1, wherein a part of a surface of the inorganic matter particle is included to protrude from the porous polymer base to an outside.

12. The separator of claim 1, wherein a thickness of the separator for an electrochemical device is 9 gm or less.

13. An electrochemical device comprising:
a positive electrode;
a negative electrode; and
a separator,
wherein the separator is interposed between the positive electrode and the negative electrode and is a separator for an electrochemical device according to any one of claims 1 to 12.

14. The electrochemical device of claim 13, wherein:
a first part of the separator is disposed to face the positive electrode, and
a second part of the separator is disposed to face the negative electrode.
